# EUROPÄISCHE PATENTANMELDUNG

(11) **EP 0 719 023 A2**
(43) Veröffentlichungstag der Anmeldung: **26.06.1996**
(21) Anmeldenummer: 95120273.8
(22) Anmeldetag: 21.12.1995
(51) Int. Cl.: H04M 3/42, H04M 3/50, H04Q 11/04

(54) **Digitales Telefon**

(30) Priorität: 24.12.1994 DE 4446507
(71) Anmelder: Alcatel SEL Aktiengesellschaft, D-70435 Stuttgart (DE); ALCATEL N.V., NL-2288 BH Rijswijk (NL)
(72) Erfinder: Kopp, Dieter, D-71282 Hemmingen (DE); Fesseler, Peter, D-70469 Stuttgart (DE)
(74) Vertreter: Schätzle, Albin, Dipl.-Phys.

(57) **Zusammenfassung**

Es ist eine aufwandsarme Realisierung eines Sprachinformationssystems anzugeben.

Dazu wird in einem digitalen Telefon (TE4) ein digitaler Signalprozessor (DSP) und ein zweiter Speicher (ROM) mit Programmodulen zur Ausführung der Funktionen "Automatischer Vermittler" und/oder "Mailbox" integriert.

Zusätzlich kann mittels des digitalen Telefons (TE4) eine Funktion "Individuelle Nachrichten" durchgeführt werden, bei der einem anderen Telefon (TEA) eine nur für dieses andere Telefon (TEA) bestimmte Nachricht von dem digitalen Telefon (TE4) übermittelt werden kann.

## Beschreibung

Die vorliegende Erfindung betrifft ein digitales Telefon mit einem Anschluß an ein Kommunikationsnetz.

Digitale Telefone sind allgemein bekannt und werden heute bereits vielfältig verwendet.

Bekannt ist weiterhin das Sprachinformationssystems Alctel 4610. Die Produktbeschreibung "Alcatel 4610, Welcome your customers whenever they call", CA 4610 GB ABSI-04/93 beschreibt die Möglichkeiten, die dieses Sprachinformationssystem bietet. Das Sprachinformationssystem wird direkt an eine Nebenstellenanlage angeschlossen. Über die Nebenstellenanlage existiert ein Anschluß zu einem öffentlichen Kommunikationsnetz. Das Sprachinformationssystem stellt für eine vorgegebene Anzahl der an die Nebenstellenanlage angeschlossenen Telefone eine jeweils einem dieser Telefone zugeteilte "Mailbox" zur Verfügung. Darüberhinaus wird eine zentrale "Mailbox" eingerichtet. "Mailbox" heißt in diesem Fall, daß den an die Nebenstellenanlage angeschlossenen Telefonen ein Speicher oder ein Speicherbereich zugeteilt ist, so daß dem Benutzer des Telefons eine Art Anrufbeantworter zur Verfügung steht. Der Benutzer kann eine Ansage abspeichern und Nachrichten von Anrufern, deren Anrufe er nicht annimmt abspeichern lassen. Zur Erfüllung einer Vermittlungsfunktion ist ein "Automatischer Vermittler" realisiert. Dieser übermittelt dem Anrufer, der z.B. die zentrale Telefonnummer gewählt hat, eine Ansage, mit der dem Anrufer mitgeteilt wird, wie er gezielt zu den anderen an die Nebenstellenanlage angeschlossenen Telefonen weitervermittelt werden kann und welche Personen/Abteilungen diesen Telefonen zugeordnet sind. Der "Automatische Vermittler" führt dann die von dem Anrufer gewünschte Weitervermittlung aus.

Ein Nachteil dieses Sprachinformationssystems ist, daß es für Anwendungen mit wenigen Telefonen eine aufwendige Lösung darstellt.

Aufgabe der vorliegenden Erfindung ist es, den Nachteil des Stands der Technik auf technische einfache Weise zu umgehen.

Die Aufgabe wird erfindungsgemäß durch die Lehre des Patentanspruchs 1 gelöst.

Vorteilhafterweise ist es möglich, einem Anrufer, dessen Telefonanruf erwartet wird, während der Angerufene den erwarteten Anruf nicht annehmen kann, eine nur für den Anrufer bestimmte Nachricht zu übermitteln.

Weitere vorteilhafte Ausgestaltungen der Erfindung können den abhängigen Patentansprüchen entnommen werden.

Im folgenden wird die Erfindung an Hand von Ausführungsbeispielen und den Figuren 1 bis 6 beschrieben. Es zeigen:
- Fig. 1: ein Beispiel für einen Basisanschluß für ein Kommunikationsnetz nach dem ISDN Standard, an den ein erfindungsgemäßes digitales Telefon angeschlossen ist,
- Fig. 2: ein Ausführungsbeispiel des erfindungsgemäßen digitalen Telefons,
- Fig. 3: ein Ausführungsbeispiel eines Speichers zur Sprachspeicherung,
- Fig. 4: ein Ablaufdiagramm eines Ausführungsbeispiels der Funktion "Automatischer Vermittler",
- Fig. 5: ein Ablaufdiagramm eines Ausführungsbeispiels der Funktion "Mailbox" und
- Fig. 6: ein Ablaufdiagramm eines Ausführungsbeispiels der Funktion "Individuelle Nachrichten".

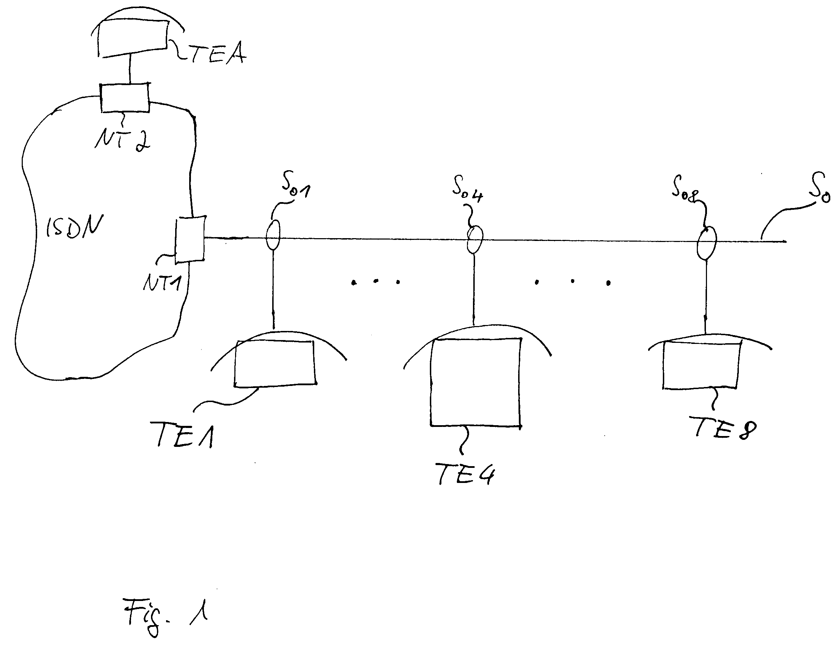

Fig. 1 zeigt ein Kommunikationsnetz ISDN nach dem ISDN (Integrated Services Digital Network)-Standard. Obwohl in den Ausführungsbeispielen ein Kommunikationsnetz nach dem ISDN-Standard beschrieben wird, darf die Erfindung nicht als darauf beschränkt angesehen werden. Es ist auch möglich, das erfindungsgemäße digitale Telefon in anderen Kommunikationsnetzen einzusetzen, in denen die Durchführung der Funktionen "Automatischer Vermittler", "Mailbox" oder "Individuelle Nachrichten" möglich ist. Das erfindungsgemäße Telefon muß dann an die Gegebenheiten dieses Kommunikationsnetzes angepaßt werden.

An eine erste Netzabschlußeinheit NT1 ist ein ISDN-Basisanschluß, ein sogenannter Sₒ-Bus, angeschlossen. An den Sₒ-Bus sind acht Teilnehmerendgeräte TE1, ..., TE8 über dazugehörige Sₒ-Schnittstellen Sₒ₁, ... Sₒ₈ angeschlossen. Das Teilnehmerendgerät TE4 ist ein erfindungsgemäßes digitales Telefon. Die Leistungsmerkmale des Sₒ-Busses können von den angeschlossenen Teilnehmerendgeräten und insbesondere von dem digitalen Telefon TE4 genutzt werden. Die Teilnehmerendgeräte TE1, ..., TE8 können mittels Endgeräteauswahlziffern EAZ1, ..., EAZ8 direkt angewählt werden. Die Endgeräteauswahlziffer EAZ0 adressiert den gesamten Basisanschluß.

An eine zweite Netzabschlußeinheit NT2 ist des weiteren mittels eines eigenen ISDN-Basisanschlusses ein anderes Telefon TEA angeschlossen.

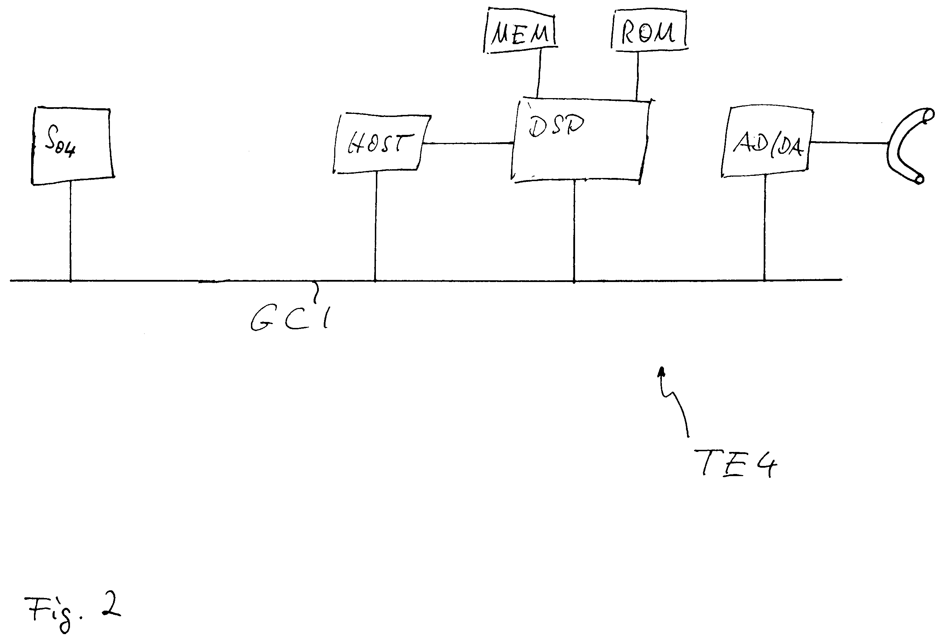

Fig. 2 zeigt ein Ausführungsbeispiel des erfindungsgemäßen digitalen Telefons TE4. Das digitale Telefon TE4 hat eine Schnittstelle Sₒ₄ zum Anschluß des digitalen Telefons TE4 an den Sₒ-Bus. Desweiteren hat es ein erstes Steuermittel HOST zur Steuerung von mit dem digitalen Telefon TE4 durchführbaren Funktionen. Das erste Steuermittel HOST hat eine direkte Verbindung zu einem digitalen Signalprozessor DSP. Mit dem digitalen Signalprozessor DSP ist über eine direkte Verbindung ein erster Speicher MEM zur Aufzeichnung und Wiedergabe von digitalisierter Sprache verbunden. Der erste Speicher MEM kann beispielsweise ein handelsübliches DRAM sein oder aber ein elektrisch löschbarer, programmierbarer Festwertspeicher, ein sogenanntes EEPROM (Electrically Erasible and Programmable Read Only Memory), wobei auch die blockweise löschbaren Flash-EPROM's gemeint sind. Des weiteren ist ein zweiter Speicher ROM über eine direkte Verbindung mit dem digitalen Signalprozessor DSP verbunden. In diesem zweiten Speicher ROM sind Programmodule abgespeichert.

Diese Programmodule können insbesondere die weiter unten beschriebenen Funktionen "Automatischer Vermittler", "Mailbox" und "Individuelle Nachrichten" ausführen. Das digitale Telefon TE4 hat weiterhin eine analoge Schnittstelle mit einem Analog-Digital/Digital-Analog-Wandler AD/DA über den ein Hörer mit einem Mikrophon zur analogen Spracheingabe und ein Lautsprecher zur analogen Sprachausgabe angeschlossen ist. Über die direkte Verbindung zwischen dem ersten Steuermittel HOST und dem digitalen Signalprozessor DSP ist ein direkter Kommandotransfer und Statustransfer und ebenfalls ein Nachrichtentransfer und Parametertransfer zwischen diesen beiden Komponenten möglich. Die beschriebenen Komponenten des digitalen Telefons TE4 sind zum Austausch von Daten an einen internen digitalen Bus GCI angeschlossen.Die Komponenten des digitalen Telefons TE4 können anstelle des internen digitalen Busses GCI auch auf andere Weise miteinander verbunden sein.

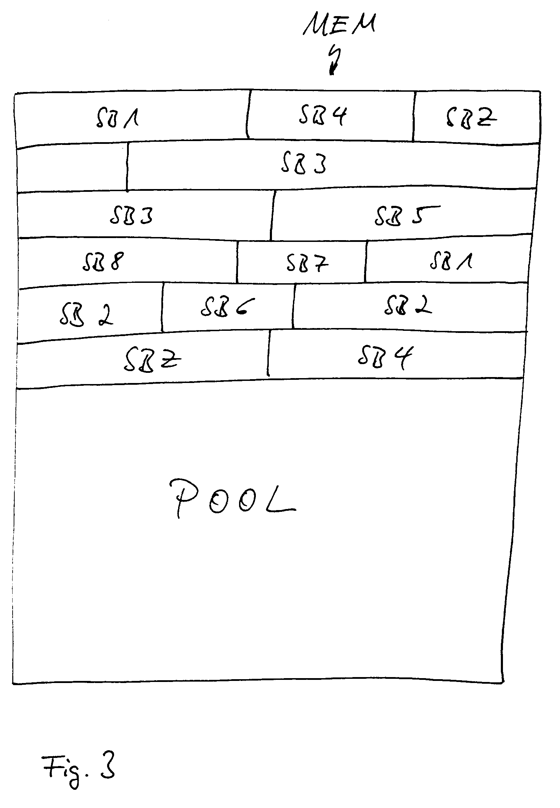

Fig. 3 zeigt ein Ausführungsbeispiel des ersten Speichers MEM. Der Speicher MEM hat acht Sprachbereiche SB1, ..., SB8, die jeweils einem der an den Sₒ-Bus angeschlossenen Teilnehmerendgeräte TE1, ..., TE8 zugeordnet sind. Darüberhinaus hat der Speicher MEM einen neunten Speicherbereich SBZ, der mehreren oder allen Teilnehmerendgeräten TE1, ..., TE8 zugeordnet ist. Diese neun Speicherbereiche SB1, ..., SB8, SBZ stellen jeweils eine logische Zuordnung von den mit Sprachdaten von oder für das jeweilige Teilnehmerendgerät belegten Speicherplatz zu dem jeweiligen Teilnehmerendgerät TE1, ..., TE8 dar. Die Speicherbereiche SB1, ..., SB8, SBZ müssen nicht notwendigerweise eine physikalische Einheit sein, sondern können vielmehr , in beliebige Teilspeicherbereiche unterteilt, in dem ersten Speicher MEM verteilt sein. Die Speicherbereiche SB1, ..., SB8, SBZ haben keine festgelegte Größe, sondern es wird jeweils soviel Speicherplatz belegt, wie benötigt wird. Die Speicherbereiche enthalten sowohl Ansagen oder Sprachnachrichten zur Übermittlung in das Kommunikationsnetz ISDN, beispielsweise zu dem anderen Telefon TEA, als auch Sprachnachrichten, die über das Kommunikationsnetz ISDN, beispielsweise von dem anderen Telefon TEA kommend, zu dem digitalen Telefon TE4 übermittelt wurden.

Darüberhinaus besitzt der Speicher MEM einen weiteren Bereich POOL zur Speicherung irgendwelcher anders gearteter Sprachnachrichten. In den Speicherbereichen SB1, ..., SB8, SBZ können abgespeicherte Sprachnachrichten irgendwelchen festlegbaren Teilnehmernummern zugewiesen werden.

Im folgenden werden nun drei Ausführungsbeispiele für die Durchführung der Funktionen "Automatischer Vermittler", "Mailbox" und "Indiviuelle Nachrichten", die insbesondere mittels des digitalen Signalprozessors DSP und des zweiten Speichers ROM durchgeführt werden können, beschrieben.

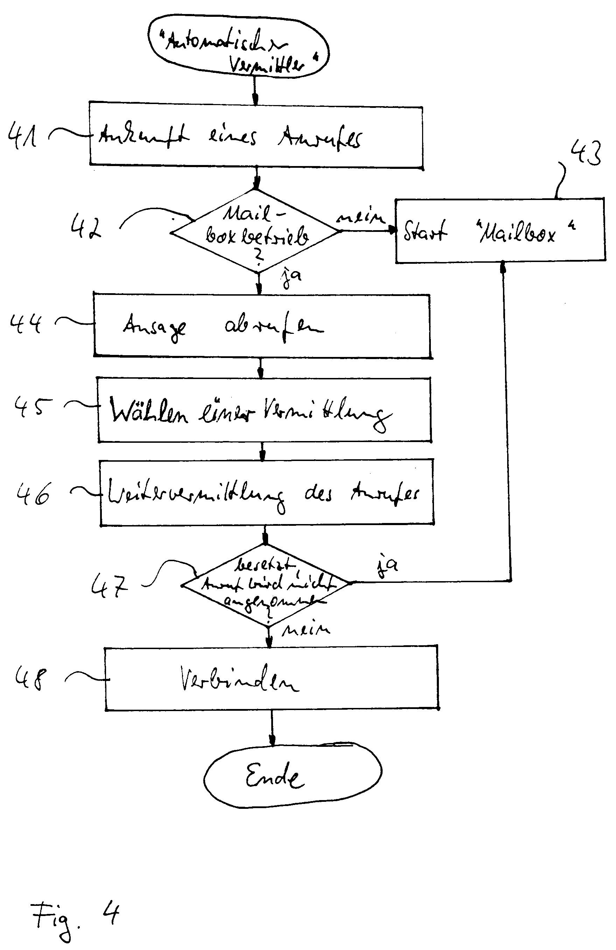

Fig. 4 zeigt das Ablaufdiagramm des Ausführungsbeispiels der Funktion "Automatischer Vermittler". In einem ersten Schritt 41 trifft ein Anruf von dem anderen Telefon TEA aus dem Kommunikationsnetz ISDN auf den vorliegenden Basisanschluß Sₒ. Mittels der Endgeräteauswahlziffer EAZ 0 wurde der gesamte Basisanschluß adressiert. In einem Schritt 42 wird zunächst überprüft ob ein genereller "Mailbox-Betrieb" eingeschaltet ist. Beim generellen "Mailbox-Betrieb" sind alle Teilnehmerendgeräte TE1, ..., TE8 des Basisanschlusses nicht besetzt. Dies kann beispielsweise nachts oder am Wochenende der Fall sein. Ist das der Fall, dann wird in einem Schritt 43 zu der Funktion "Mailbox" verzweigt. Diese Funktion "Mailbox" wird weiter unten beschrieben. Ist der generelle "Mailbox-Betrieb" nicht eingeschaltet, so folgt in einem Schritt 44 die Übermittlung einer Ansage an den Anrufer. Diese Ansage wird dem Speicherbereich SBZ des ersten Speichers MEM entnommen. Die Ansage könnte etwa folgenden Wortlaut haben: "Guten Tag. Hier ist die Firma XY. Wenn sie mit der Patentabteilung sprechen wollen, tippen sie bitte die Ziffer 1. Wollen sie mit dem Vertrieb sprechen, tippen sie bitte die Nummer 2. Herr Müller hat die Nummer 3. Möchten sie mit der Zentrale verbunden werden, tippen sie bitte die Ziffer 0 oder warten sie nach dieser Ansage einige Sekunden". In einem Schritt 45 wird die gewünschte Vermittlung und die entsprechende Ziffer als DTMF (Dual Tone Multi Frequency)-Ton im digitalen Telefon TE4 empfangen und ausgewertet. Ist das andere Telefon TEA ein Telefon, das keine DTMF-Töne erzeugen kann, dann wird das Ende der Ansage abgewartet, um anschließend mit der Zentrale verbunden zu werden. In einem Schritt 46 übernimmt das digitale Telefon TE4 die automatische Weitervermittlung des Anrufes an das entsprechende Teilnehmerendgerät TE1, ..., TE8, entsprechend der Wahl des anderen Telefons TEA. Dabei kann in bekannter Weise das Leistungsmerkmal Anrufumleitung, das durch das ISDN an dem Basisanschluß zur Verfügung gestellt wird, durchgeführt werden. In einem Schritt 47 wird daraufhin überprüft, ob das angewählte Teilnehmerendgerät TE1, ..., TE8 besetzt ist oder ob nach einer bestimmten festlegbaren Zeit der umgeleitete Anruf von dem gewählten Teilnehmerendgerät nicht angenommen wird. Ist das der Fall, so wird erneut zu dem Schritt 43 verzweigt, in dem das digitale Telefon TE4 in die Funktion "Mailbox" umschaltet. Wird der gewünschte Anruf angenommen, dann wird in einem Schritt 48 die gewünschte Verbindung fertig aufgebaut.

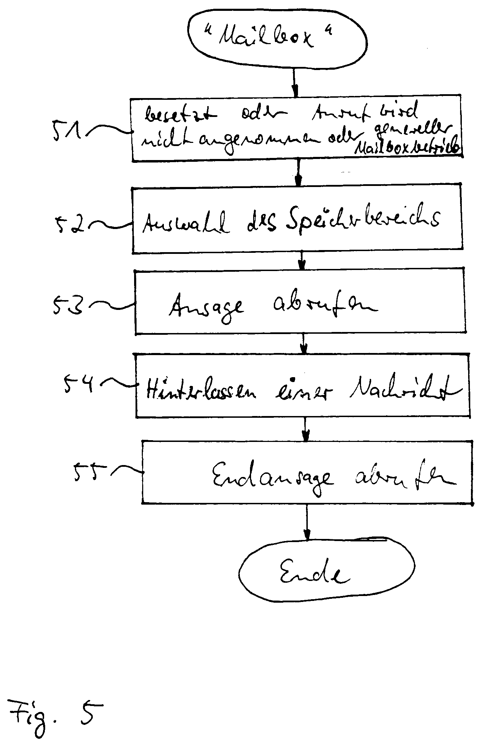

Fig. 5 zeigt das Ablaufdiagramm des Ausführungsbeispiels der Funktion "Mailbox". In einem ersten Schritt 51 wird festgestellt, daß eines der an den Sₒ-Bus angeschlossenen Teilnehmerendgeräte TE1, ..., TE8, das einen Anruf von dem anderen Telefon TEA aus dem Kommunikationsnetz ISDN erhält, besetzt ist, der Anruf nach einer bestimmten vorgebbaren Zeit nicht angenommen wird oder der generelle "Mailbox-Betrieb" eingeschaltet ist. Daraufhin wird in einem Schritt 52 der dem angerufenen Teilnehmerendgerät TE1, ..., TE8 zugeordnete Speicherbereich in dem ersten Speicher MEM angesteuert. Dieser Speicherbereich SB1, ..., SB8, SBZ stellt die "Mailbox" der jeweiligen zugeordneten Teilnehmerendgeräte TE1, ..., TE8 oder die zentrale "Mailbox" SBZ für alle Teilnehmerendgeräte dar. Die Speicherbereiche SB1, ..., SB8, SBZ werden über die Endgeräteauswahlziffern der ihnen zugeordneten Teilnehmerendgeräte TE1, ... TE8 und die EAZ0, die den gesamten Basisanschluß adressiert, angesteuert. In einem Schritt 53 wird dann aus dem ausgewählten Speicherbereich SB1, ..., SB8, SBZ eine vorher abgespeicherte Ansage ausgelesen und dem anderen Telefon TEA übermittelt. Diese Ansage entspricht üblichen Ansagen, wie man sie von herkömmlichen Anrufbeantwortern her kennt. Jeder Benutzer eines der Teilnehmerendgeräte TE1, ..., TE8 kann allerdings individuell für sich in dem zugeordneten Speicherbereich SB1, ..., SB8, SBZ eine eigene Nachricht abspeichern. In einem Schritt 54 erhält das andere Telefon TEA anschließend die Möglichkeit, dem angerufenen Teilnehmerendgerät eine Nachricht zu hinterlassen. Diese Nachricht wird dann in dem ausgewählten Speicherbereich SB1, ..., SB8, SBZ abgespeichert und kann später abgerufen werden. In einem Schritt 55 kann anschließend dem anderen Telefon TEA eventuell eine Endansage übermittelt werden. Diese Endansage ist ebenfalls in dem Speicherbereich SB1, ..., SB8, SBZ, abgespeichert.

Die in den Speicherbereichen SB1, ..., SB8, SBZ abgespeicherten Nachrichten sollten von dem jeweiligen Benutzer individuell abrufbar sein. Jeder der Speicherbereiche SB1, ..., SB8 muß dazu mit einem eigenen Sicherheitskode ausgestattet sein. Da mehrere Benutzer das digitale Telefon TE4 in der Funktion "Mailbox" benutzen, muß der Sicherheitskode sowohl bei Fernabfrage als auch bei direkter Abfrage wirksam sein. Dies kann auf zweierlei Arten geschehen. Die allgemein übliche Methode setzt einen DTMF-Tonerzeuger ein, mit dem zu einem bestimmten Zeitpunkt ein Ziffernkode eingetippt werden muß. Die zweite Methode ist eine Identifizierung der Sprache des jeweiligen Benutzers. Eine hierbei verwendbare Vorgehensweise zur Identifizierung der Sprache ist beispielsweise in der Patentanmeldung DE-A 42 07 837 beschrieben. Ein Benutzer kann also nur dann Nachrichten aus dem Speicherbereich SB1, ..., SB8, SBZ abrufen, wenn er sich gegenüber dem digitalen Telefon TE4 identifiziert. Dafür hat das digitale Telefon TE4 ein Vergleichsmittel, das in den hier beschriebenen Ausführungsbeispielen durch das erste Steuermittel HOST realisiert ist. Dem digitalen Telefon TE4 wird ein Identifizierungskode übermittelt. Dieser kann, wie oben gesagt, eine DTMF-Tonfolge oder Sprache sein. Das Vergleichsmittel vergleicht den übermittelten Identifizierungskode mit dem Sicherheitskode des jeweiligen Speicherbereichs SB1, ..., SB8, SBZ und übermittelt bei Übereinstimmung die abgerufene Sprachnachricht an das zugehörige Teilnehmergerät TE1, ..., TE8. Für den zentralen Speicherbereich SBZ kann in ähnlicher Weise ein Sicherheitskode vorgesehen werden, mittels dessen allerdings möglichst alle Benutzer der Teilnehmerendgeräte TE1, ..., TE8 Zugang zu diesem zentralen Speicherbereich SBZ erhalten sollten.

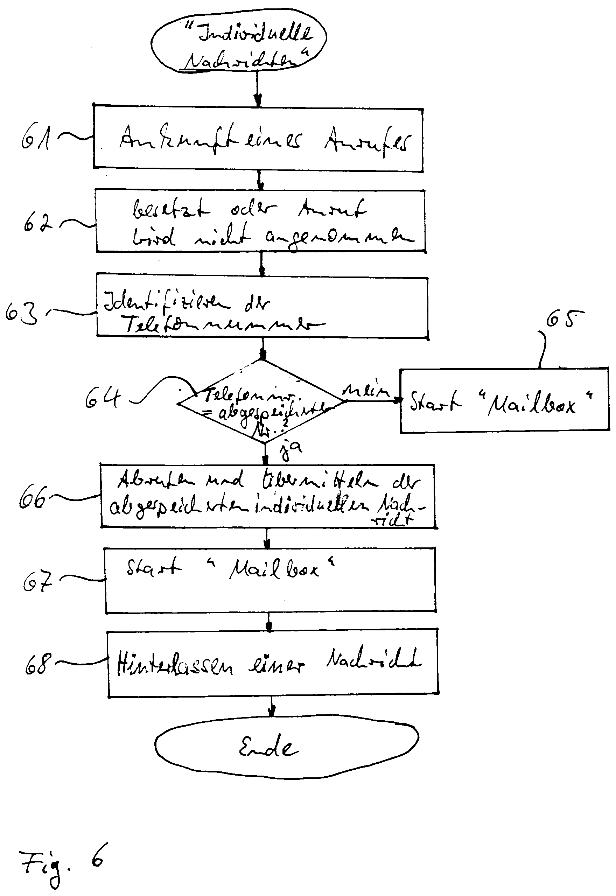

Fig. 6 zeigt das Ablaufdiagramm des Ausführungsbeispiels der Funktion "Individuelle Nachrichten". In einem Schritt 61 erreicht ein Anruf des anderen Telefons TEA eines der Teilnehmerendgeräte TE1, ..., TE8 des Basisanschlusses. In einem Schritt 62 wird anschließend festgestellt, daß der Anruf nicht angenommen wird. Es ist auch möglich, daß der Benutzer eines Teilnehmerendgerätes TE1, ..., TE8 dem digitalen Telefon TE4 mitgeteilt hat, daß er nicht anwesend ist. In einem solchen Fall wird dann in einem Schritt 63 die Telefonnummer des anderen Telefons TEA identifiziert. Dabei wird davon ausgegangen, daß dem Basisanschluß bei der Zustellung des Anrufes diese Telefonnummer signalisiert wird. Der Benutzer eines Teilnehmerendgerätes TE1, ..., TE8 hat die Möglichkeit in dem Speicherbereich SB1, ..., SB8, SBZ gezielt Nachrichten ausschließlich einer Telefonnummer zuzuweisen. In einem Schritt 64 wird daher daraufhin die identifizierte Telefonnummer des anderen Telefons TEA mit den in dem jeweiligen Speicherbereich SB1, ..., SB8, SBZ abgespeicherten Telefonnummern, denen eine individuelle Nachricht zugeordnet ist, verglichen. Stimmt die identifzierte Telefonnummer nicht mit den in dem jeweiligen Speicherbereich SB1, ..., SB8, SBZ abgespeicherten Telefonnummern überein, dann wird in einem Schritt 65 zu der bereits beschriebenen Funktion "Mailbox" umgeschaltet. Stimmt die identifizierte Telefonnummer allerdings mit einer der abgespeicherten Telefonnummern überein, dann wird in einem Schritt 66 die der Telefonnummer zugeordnete individuelle Nachricht aus dem zugehörigen Speicherbereich SB1, ..., SB8, SBZ, ausgelesen und an das andere Telefon TEA übermittelt. Die Durchführung der Identifizierung der Telefonnummer des anderen Telefons TEA, der Vergleich der abgespeicherten Telefonnummern mit der identifizierten Telefonnummer und das Auslesen und die Übermittlung der hinterlassenen individuellen Nachricht wird im vorliegenden Ausführungsbeispiel mittels des ersten Steuermittels HOST durchgeführt. Es ist auch möglich diese Schritte mittels eines extra dafür vorgesehenen hier nicht näher spezifizierten zweiten Steuermittels durchzuführen. Nach der Übermittlung der hinterlassenen individuellen Nachricht an das andere Telefon TEA wird in einem Schritt 67 zu der Funktion "Mailbox" umgeschaltet. Dadurch erhält das andere Telefon TEA die Möglichkeit, eine Nachricht hinterlassen zu können, nachdem ihm neue Informationen übermittelt wurden. Diese eventuell hinterlassene Nachricht wird in dem jeweiligen Speicherbereich SB1, ..., SB8 abgespeichert. Bei der Durchführung der Funktion "Mailbox" kann hier eine andere Ansage statt der üblicherweise verwendeten Begrüßungsansage verwendet werden, da dem anderen Telefon TEA bereits eine Nachricht eines der Teilnehmerendgeräte TE1, ..., TE8 übermittelt wurde.

Die in den Ausführungsbeispielen beschriebene Durchführung der Funktionen "Mailbox", "Automatischer Vermittler" und "Individuelle Nachrichten" mittels der in dem zweiten Speicher ROM abgespeicherten Programmodule darf nicht auf die beschriebenen Ausführungen beschränkt werden. Vielmehr gewährleistet gerade die Verwendung des digitalen Signalprozessors DSP und des zweiten Speichers ROM mit den Programmodulen in Kombination mit der Steuerung der Funktionen des digitalen Telefons TE4 mittels des ersten Steuermittels HOST eine besonders flexible und einfache Durchführung der Funktionen. Dabei ist es dem Handeln eines Fachmannes überlassen, die Programmodule und die Durchführung der Funktionen "Mailbox", "Automatischer Vermittler" und "Individuelle Nachrichten" in jeglicher Form miteinander zu kombinieren.

## Patentansprüche

1. Digitales Telefon (TE4) mit einem Anschlußmittel (S₀₄) an einen Anschluß (S₀) für ein Kommunikationsnetz (ISDN), an den wenigstens ein weiteres digitales Telefon (TE1, ...,TE8) angeschlossen ist, mit einem ersten Steuermittel (HOST) zur Steuerung von mit dem digitalen Telefon (TE4) durchführbaren Funktionen,
mit einem ersten Speicher (MEM) zur Sprachspeicherung,
mit einem digitalen Signalprozessor (DSP),
mit einem zweiten Speicher (ROM),
mit Programmodulen, die in dem zweiten Speicher (ROM) abgespeichert sind, und die eine erste Funktion Automatischer Vermittler ausführen, bei der aus dem ersten Speicher (MEM) Sprachdaten ausgelesen werden, diese Sprachdaten über das Kommunikationsnetz (ISDN) zu einem anderen Telefon (TEA) gesendet werden, das einen eigenen Anschluß an das Kommunikationsnetz (ISDN) hat, und das digitale Telefon (TE4) aufgrund einer von dem anderen Telefon (TEA) kommenden Signalisierung einen Verbindungsaufbau von dem anderen Telefon (TEA) zu dem wenigstens einen weiteren digitalen Telefon (TE1,..., TE8) veranlaßt,
und/oder die eine zweite Funktion Mailbox ausführen, bei der sowohl dem digitalen Telefon (TE4) als auch dem wenigstens einen weiteren digitalen Telefon (TE1,..., TE8) ein eigener Anrufbeantwortermode zur Verfügung steht.

2. Digitales Telefon nach Anspruch 1,
dadurch gekennzeichnet, daß mittels der in dem zweiten Speicher (ROM) abgespeicherten Programmodule eine dritte Funktion Individuelle Nachrichten ausgeführt werden kann,
bei der dem anderen Telefon (TEA) in dem ersten Speicher (MEM) abgespeicherte Nachrichten übermittelt werden, die dort ausschließlich zur Übermittlung an das andere Telefon (TEA) abgespeichert sind.

3. Digitales Telefon nach Anspruch 1 oder 2,
dadurch gekennzeichnet, daß der erste Speicher (MEM) mehrere Speicherbereiche (SB1, ..., SB8, SBZ) hat,
daß dem wenigstens einen weiteren digitalen Telefon (TE1, ..., TE8), einer der Speicherbereiche (SB1, ..., SB8, SBZ) exklusiv zugeordnet ist und/oder
daß einer der Speicherbereiche (SB1, ..., SB8, SBZ) dem digitalen Telefon (TE4) und dem wenigstens einen weiteren digitalen Telefon (TE1, ..., TE8) zusammen zugeordnet ist.

4. Digitales Telefon nach Anspruch 3,
dadurch gekennzeichnet, daß einer der Speicherbereiche (SB1, ..., SB8, SBZ) mit einem Sicherheitskode versehen ist, und daß das digitale Telefon (TE4) ein Vergleichsmittel hat, das diesen Sicherheitskode mit einem dem digitalen Telefon (TE4) übermittelten Identifizierungskode vergleicht, so daß in diesem Speicherbereich (SB1, ..., SB8, SBZ) abgespeicherte, von dem anderen Telefon (TEA) gekommene Sprachnachrichten nur dann abrufbar sind, wenn das Vergleichsmittel bei einem Abruf dieser Sprachnachrichten eine Übereinstimmung des Sicherheitskodes mit dem Identifizierungskode feststellt.

5. Digitales Telefon nach Anspruch 2,
dadurch gekennzeichnet, daß es ein zweites Steuermittel hat, das die Teilnehmernummer des anderen Telefons (TEA) erfaßt, diese erfaßte Teilnehmernummer mit in dem ersten Speicher (MEM) abgespeicherten Teilnehmernummern vergleicht, denen jeweils eine in dem ersten Speicher (MEM) abgespeicherte Nachricht zugeordnet ist, und bei Übereinstimmung veranlaßt, daß dem anderen Telefon (TEA) die entsprechende unter seiner Teilnehmernummer abgespeicherte Nachricht aus dem ersten Speicher (MEM) übermittelt wird.

6. Digitales Telefon nach Anspruch 1,
dadurch gekennzeichnet, daß das Anschlußmittel (S₀₄) ein Sₒ-Interface zum Anschließen des digitalen Telefons (TE4) an einen Sₒ-Bus für ein Kommunikationsnetz nach dem ISDN (Integrated Services Digital Network)-Standard ist.
